# EUROPEAN PATENT APPLICATION

(11) **EP 2 189 906 A1**
(43) Date of publication of application: **26.05.2010**
(21) Application number: 09171298.4
(22) Date of filing: 25.09.2009
(51) Int. Cl.: G06F 11/07

(54) **Method and apparatus for abnormality recovering of data card, and data card**

(30) Priority: 20.11.2008 CN 200810176349
(71) Applicant: Huawei Device Co., Ltd., Longgang District Shenzhen Guangdong 518129 (CN)
(72) Inventor: Jiang, Wenchung, 518129, Shenzhen Guangdong (CN)
(74) Representative: Thun, Clemens

(57) **Abstract**

A method and apparatus for abnormality recovering of data card is provided. The method includes: obtaining identification information of a network interface card device in an accessed data card; obtaining status information of the network interface card device in accordance with the identification information of the network interface card device; determining whether the network interface card device is abnormal in accordance with the status information of the network interface card device; and unloading a driver program of the network interface card device if the network interface card device is abnormal, and reloading the driver program of the network interface card device. Correspondingly, the present invention further provides an apparatus and a data card for implementation of the method. The present invention achieves the technical effect of recovering the NIC device to its normal state without having to reboot the PC.

## Description

### Field of Technology

The present invention relates to network interface card, and specifically to a method and apparatus for abnormality recovering of data card, and a data card.

### Background of the Invention

With the development of Internet technology, the traditional wired mode of accessing a network cannot satisfy the requirements of users to access the network at random locale and at any timing, and the users begin to access the network through the wireless mode. Use of the wireless access data card to access the network is relatively common. In use, the wireless access data card can also simulate configurations of other devices such as modem, COM port, network interface card (NIC), and CDROM etc. via universal serial bus (USB), so that a single wireless access data card possesses a multiplicity of functions. The multiple devices simulated by a wireless access data card are usually embodied as a composite device on the PC.

The inventor found the following problems in the prior art during implementation of the present invention. Once a currently available wireless access data card (hereinafter referred to as data card) is inserted into the PC, the data card will map all ports of devices including NIC and storage type device, and if the data card is pulled out of the PC perforce without performing the safe deletion operation of device and if the data card is inserted again into the PC without rebooting the PC, there will be abnormality in the NIC device leading to inoperability of the data card, which is specifically reflected in a yellow exclamation mark appearing on the NIC device in the device manager. At this time, the NIC device cannot be normally recovered with repetitive plugging in and out of the data card in the case the PC is not rebooted. A method and system for processing errors in the computer system was made public in the prior art, whereby the failed hardware is recovered from the abnormal state by rebooting the system, but rebooting of the system takes so much time that great inconvenience is brought to the user, thereby making it impossible to satisfy the requirement of the user.

### Summary of the Invention

Embodiments of the present invention provide a method and apparatus for abnormality recovering of data card, and a data card, which make it possible for the NIC device to normally operate in the case the data card is pulled out of the PC perforce and inserted again into the PC without rebooting the PC.

An embodiment of the present invention provides a method for abnormality recovering of data card. The method includes: obtaining identification information of a network interface card device in an accessed data card; obtaining status information of the network interface card device in accordance with the identification information of the network interface card device; determining whether the network interface card device is abnormal in accordance with the status information of the network interface card device; and unloading a driver program of the network interface card device if the network interface card device is abnormal, and reloading the driver program of the network interface card device.

Another embodiment of the present invention provides an apparatus for abnormality recovering of a data card. The apparatus includes: an identification information obtaining unit, configured to obtain identification information of a network interface card device in an accessed data card; a status information obtaining unit, configured to obtain status information of the network interface card device in accordance with the identification information of the network interface card device; an abnormality determining unit, configured to determine whether the network interface card device is abnormal in accordance with the status information of the network interface card device, and output a determination result signal; a driver program unloading unit, configured to unload a driver program of the network interface card device in accordance with the determination result signal; and a driver program loading unit, configured to reload the driver program of the network interface card device after the driver program of the network interface card device is unloaded by the driver program unloading unit.

Another embodiment of the present invention provides a data card that includes the aforementioned apparatus for abnormality recovering of a data card.

Advantageous effect of the embodiments of the present invention rests in the use of technical means to re-unload the NIC device to solve the technical problem of abnormality of the NIC device due to plugging out of the wireless access data card perforce, so as to achieve the technical effect of recovering the NIC device to its normal state without having to reboot the PC.

### Brief Description of the Drawings

The accompanying drawings as explained here are used to provide further comprehension of the present invention, constitute part of the present application, but do not restrict the present invention. In the drawings,
Fig. 1 is a schematic diagram illustrating an apparatus that makes use of a data card to access a network in accordance with an embodiment of the present invention;
Fig. 2 is a block diagram illustrating an apparatus for recovering abnormal unloading of a data card in accordance with an embodiment of the present invention;
Fig. 3 is a flowchart illustrating a method for recovering abnormal unloading of a data card in accordance with an embodiment of the present invention;
Fig. 4 is a flowchart illustrating a method for recovering abnormal unloading of a data card based on the Windows operating system in accordance with an embodiment of the present invention; and
Fig. 5 is a block diagram illustrating an apparatus for recovering abnormal unloading of a data card in accordance with an embodiment of the present invention.

### Detailed Description of the Embodiments

To make more apparent the objectives, technical solutions and advantages of the present invention, the present invention is described in further detail below with reference to the specific embodiments and the accompanying drawings. The exemplary embodiments of the present invention and the explanations thereof are meant to explain rather than to restrict the present invention.

The embodiments of the present invention provide a method and apparatus for recovering abnormal unloading of a data card. The embodiments are described in detail below with reference to the accompanying drawings.

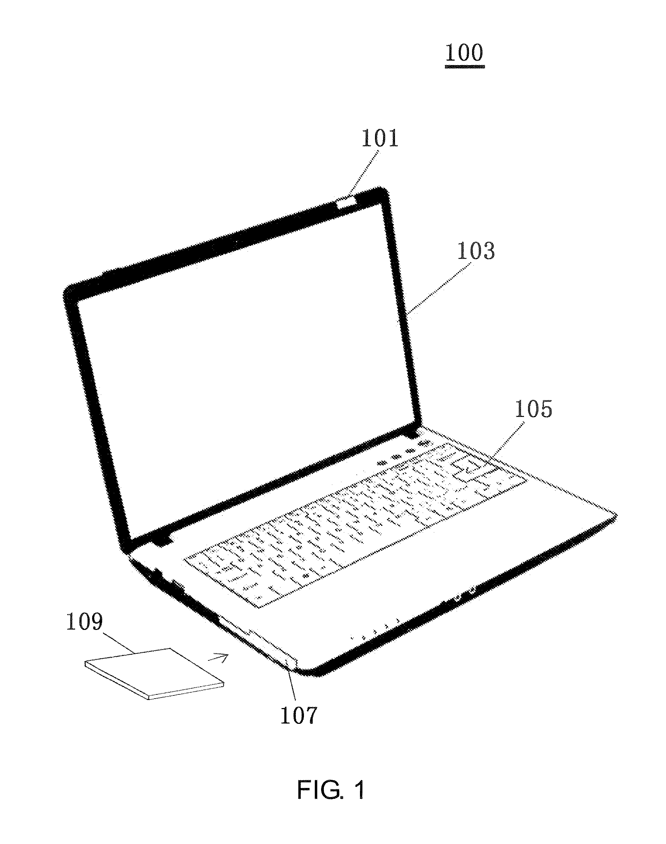

Fig. 1 is a schematic diagram illustrating an apparatus that makes use of a data card to access a network in accordance with an embodiment of the present invention. As shown in Fig. 1, a notebook computer 100 includes a casing 101, a display screen 103, a keyboard 105, a data card slot 107 and a wireless access data card 109. In use, once the user inserts the wireless access data card 109 into the data card slot 107 of the notebook computer 100, it is made possible to access the network through the wireless access data card 109. The wireless access data card 109 is one kind of a data card and may include therein a storage device and a network interface card device.

As should be noted, the above explanation is made by taking the notebook computer 100 for example, but the host machine cooperative for use with the data card is not limited to the notebook computer. To facilitate explanation, the host machine cooperative for use with the data card is also exemplified as the notebook computer in the following, albeit the reader should be aware that the host machine is not limited to the notebook computer.

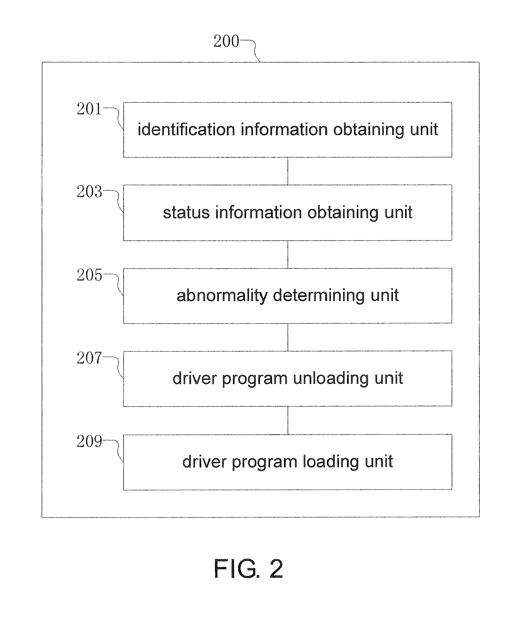

Fig. 2 is a block diagram illustrating an apparatus for recovering abnormal unloading of a data card having a network interface card and a storage device in accordance with an embodiment of the present invention. As shown in Fig. 2, the apparatus 200 for recovering abnormal unloading of a data card includes:
an identification information obtaining unit 201, configured to obtain identification information of a network interface card device in an accessed data card;
a status information obtaining unit 203, configured to obtain status information of the network interface card device in accordance with the identification information of the network interface card device;
an abnormality determining unit 205, configured to determine whether the network interface card device is abnormal in accordance with the status information, and output a determination result signal;
a driver program unloading unit 207, configured to unload a driver program of the network interface card device in accordance with the determination result signal; and
a driver program loading unit 209, configured to reload the driver program of the network interface card device after the driver program of the network interface card device is unloaded by the driver program unloading unit 207.

The apparatus for recovering abnormal unloading of a data card as shown in Fig. 2 can be applied to the notebook computer 100 as shown in Fig. 1. The notebook computer 100 uses the Windows 2000 or Windows XP operating system. When the wireless access data card 109 is pulled out perforce, the network interface card (NIC) device cannot be normally removed since the handler of the storage type device is occupied, so that removal of the NIC device fails. The essential cause for such problem is due to deficiencies of the driver program of the storage type device and the driver program of the USB layer of the operating system. Since the apparatus for recovering abnormal unloading of a data card in accordance with this embodiment employs the technical means to re-unload the NIC device, the technical problem of abnormality of the NIC device due to plugging out of the wireless access data card perforce is solved, so as to achieve the technical effect of recovering the NIC device to its normal state without having to reboot the PC.

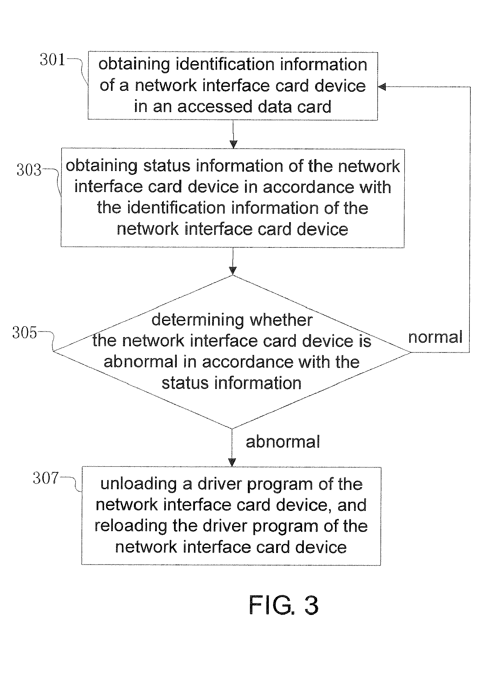

Fig. 3 is a flowchart illustrating a method for recovering abnormal unloading of a data card having a network interface card and a storage device in accordance with an embodiment of the present invention. As shown in Fig. 3, the method of recovering abnormal unloading of a data card includes.

Block 301: Identification information of a network interface card device in an accessed data card is obtained.

Block 303: Status information of the network interface card device is obtained in accordance with the identification information of the network interface card device.

Block 305: It is determined whether the network interface card device is abnormal in accordance with the status information, returning to block 301 if the network interface card device is normal, and the procedure proceeds with block 307 if the network interface card device is abnormal. and

Block 307: A driver program of the network interface card device is unloaded, and the driver program of the network interface card device is reloaded.

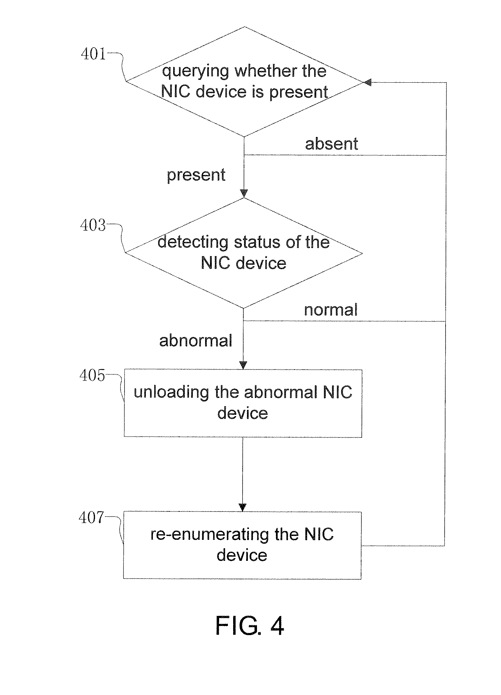

Fig. 4 is a flowchart illustrating a method of recovering abnormal unloading of a data card based on the Windows operating system in accordance with an embodiment of the present invention. As shown in Fig. 4, the method of recovering abnormal unloading of a data card includes:
Block 401: It is queried whether the NIC device is present. The needed NIC device can be conveniently found by the name of the NIC device to be queried, and by Windows API SetupDiGetClassDevs(), SetupDiEnumDevicelnfo(), SetupDiGetDeviceRegistryProperty(). The process proceeds to block 403 if the device is found, and otherwise block 401 is resumed after delay for a period of time.
Block 403: Status of the device is detected. It can be quickly learnt as to whether the current device is abnormal with the device information found in block 401 and Windows API CM_Get_DevNode_Status(). The process returns to block 401 if the device is normal, and otherwise proceeds to block 405.
Block 405: The abnormal NIC device is unloaded. The device can be quickly unloaded with the device information found in block 401 and Windows API SetupDiCallClassInstaller(). The process proceeds to block 407 after completion of unloading.
Block 407: The NIC device is re-enumerated. A composite device node at the NIC device is obtained through three Windows APIs of SetupDiGetClassDevs(), SetupDiEnumDeviceInfo() and SetupDiGetDeviceInstanceId(), and the composite device node is re-enumerated by invoking two APIs of CM_Locate_DevNode() and CM_Reenumerate_DevNode(). The process proceeds to block 401 after completion of the above.

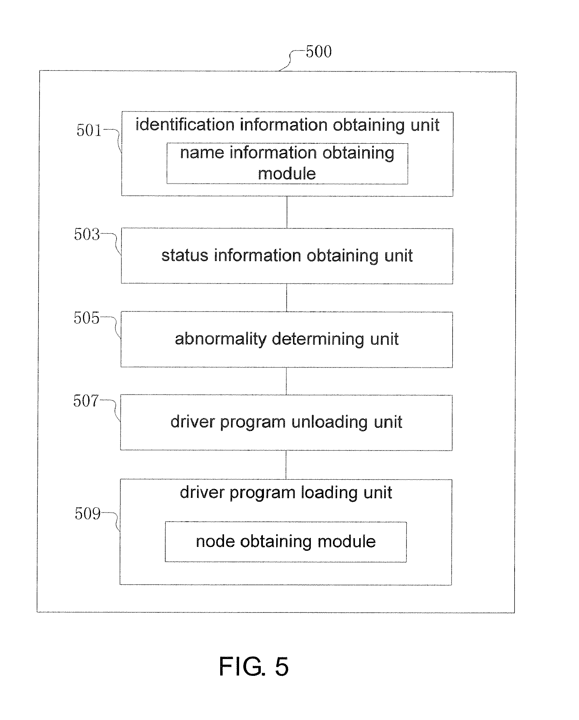

Fig. 5 is a block diagram illustrating an apparatus for recovering abnormal unloading of a data card having a network interface card and a storage device in accordance with an embodiment of the present invention.

As shown in Fig. 5, the apparatus 500 for recovering abnormal unloading of a data card includes:
an identification information obtaining unit 501, configured to obtain identification information of a network interface card device in an accessed data card; the identification information obtaining unit 501 including a name information obtaining module configured to obtain name information of the network interface card device in the accessed data card;
a status information obtaining unit 503, configured to obtain status information of the network interface card device in accordance with the name information of the network interface card device;
an abnormality determining unit 505, configured to determine whether the network interface card device is abnormal in accordance with the status information, and output a determination result signal;
a driver program unloading unit 507, configured to unload a driver program of the network interface card device in the case the determination result signal is abnormal; and
a driver program loading unit 509, configured to reload the driver program of the network interface card device after the driver program of the network interface card device is unloaded by the driver program unloading unit; the driver program loading unit 509 including a node obtaining module configured to obtain node information of the network interface card device.

In another embodiment of the present invention, the wireless access data card carries additionally therewith a connection manager which includes the apparatus for abnormality recovering of the wireless access data card provided in the embodiment of the present invention, so that once abnormality occurs in the NIC device, it can be automatically corrected before the user finds the problem.

In another embodiment of the present invention, the method of abnormality recovering of the wireless access data card operates when the PC is started, so that once abnormality occurs in the NIC device, the method of abnormality recovering of the wireless access data card immediately corrects the abnormality.

The method and apparatus for abnormality recovering of the wireless access data card in accordance with the embodiments of the present invention solve the problem of inoperability due to abnormality of the NIC device when the wireless access data card has been pulled out perforce, thus avoiding the need for the user to reboot the PC, saving time, and making it significantly convenient for the user to operate.

As can be clearly known to persons skilled in the art through the above explanations of the embodiments, certain embodiments of the present invention can be realized with the aid of software plus the necessary general hardware platform, and can of course also be realized by hardware alone. On the basis of such understanding, the technical solutions of the embodiments of the present invention can be embodied in the form of a software product, which is stored in a storage medium and includes a multiplicity of instructions enabling a computing device to execute the methods of the embodiments of the present invention.

By the above specific embodiments, the objectives, technical solutions and advantageous effects of the present invention are described in further detail. As should be understood, however, the above are merely directed to specific embodiments of the present invention, and are not used to restrict the protection scope of the present invention. Any modification, equivalent substitution and improvement made within the principles of the present invention shall be covered by the protection scope of the present invention.

## Claims

1. A method for abnormality recovering of a data card, comprising:
obtaining identification information of a network interface card device in an accessed data card;
obtaining status information of the network interface card device in accordance with the identification information of the network interface card device;
determining whether the network interface card device is abnormal in accordance with the status information of the network interface card device; and
unloading a driver program of the network interface card device if the network interface card device is abnormal, and reloading the driver program of the network interface card device.

2. The method according to claim 1, wherein the obtaining identification information of a network interface card device in an accessed data card comprises: obtaining name information of the network interface card device in the accessed data card.

3. The method according to claim 1, wherein the obtaining status information of the network interface card device in accordance with the identification information of the network interface card device comprises: obtaining the status information of the network interface card device in accordance with the name information of the network interface card device.

4. The method according to claim 1, wherein the reloading the driver program of the network interface card device comprises: obtaining node information of the network interface card device and reloading the driver program of the network interface card device in accordance with the node information.

5. An apparatus for abnormality recovering of a data card, comprising:
an identification information obtaining unit, configured to obtain identification information of a network interface card device in an accessed data card;
a status information obtaining unit, configured to obtain status information of the network interface card device in accordance with the identification information of the network interface card device;
an abnormality determining unit, configured to determine whether the network interface card device is abnormal in accordance with the status information of the network interface card device, and output a determination result signal;
a driver program unloading unit, configured to unload a driver program of the network interface card device in accordance with the determination result signal; and
a driver program loading unit, configured to reload the driver program of the network interface card device after the driver program of the network interface card device is unloaded by the driver program unloading unit.

6. The apparatus according to claim 5, wherein the identification information obtaining unit comprises: a name information obtaining module, configured to obtain name information of the network interface card device in the accessed data card.

7. The apparatus according to claim 5, wherein the status information obtaining unit is configured to obtain the status information of the network interface card device in accordance with the name information of the network interface card device.

8. The apparatus according to claim 5, wherein the driver program loading unit comprises:
a node obtaining module, configured to obtain node information of the network interface card device after the driver program of the network interface card device is unloaded by the driver program unloading unit; and
a loading module, configured to reload the driver program of the network interface card device in accordance with the node information of the network interface card device.

9. A data card, comprising the apparatus for abnormality recovering of a data card according to any one of claims 5 to 8.
